# EUROPEAN PATENT APPLICATION

(11) **EP 4 671 887 A1**
(43) Date of publication of application: **31.12.2025**
(21) Application number: 25184640.8
(22) Date of filing: 23.06.2025
(51) Int. Cl.: G05B 19/4061, G05B 19/4069, G05B 19/4097

(54) **METHODS AND SYSTEMS FOR OPERATING A PLURALITY OF OPERATING HEADS OF AN OPERATING MACHINE**

(30) Priority: 28.06.2024 IT 202400015010
(71) Applicant: Prima Industrie S.p.A., 10093 Collegno (TO) (IT)
(72) Inventor: DE TONI, Paolo, I-10093 Collegno (TO) (IT); ARCIERI, Marcello, I-10093 Collegno (TO) (IT); OLMO, Luca, I-10093 Collegno (TO) (IT); TOMESCU, Stefan, I-10093 Collegno (TO) (IT)
(74) Representative: Buzzi, Notaro & Antonielli d'Oulx S.p.A.

(57) **Abstract**

A method of assigning a set of toolpaths (SCTFP) to a plurality of operating heads of an operating machine apparatus, the operating heads being displaceable within respective operating regions via a plurality of sub-systems of the operating machine apparatus (10). The method comprises: generating (400) a global toolpath (TP) based on a computerized object model (OB) provided via a computer-aided design, CAD processing stage (CP); based on respective operating regions and on a target travel time (CF), partitioning (402) the global toolpath (TP) and assigning toolpath partitions of a set of toolpath partitions (TP1, ..., TP4) to respective operating heads of the plurality of operating heads; providing a computerized machine model (DT) configured to emulate the dynamical behavior of the operating machine apparatus (10); emulating (402), via the computerized machine model (DT), the displacement of the operating heads according to the toolpath partitions (TP1, ..., TP4); based on the emulated displacement, detecting (404) collisions among operating heads; in response to detecting the presence of mutual collisions, adjusting and re-assigning toolpath partitions of the set of toolpath partitions (TP1, ..., TP4) to respective operating heads; in response to failing to detect the presence of mutual collisions, providing (406) the set of toolpath partitions (TP1, ..., TP4) as a set of collision-free toolpaths (CFTP1, ..., CFTP4; SCFTP) to the operating machine apparatus for driving the sub-systems to displace the plurality of operating heads accordingly.

## Description

### Technical field

The description relates to methods and systems for generating a work path for a computer-numerical-controlled (CNC) operating machine, for instance by means of computer-aided manufacturing (CAM) systems.

One or more embodiments relates to a method of manufacturing one or more objects via operating machines for laser cutting. Other embodiments may refer to laser welding or other laser machining.

### Background

Computer-aided manufacturing (CAM) systems represent an interface between the Computer-Aided Design (CAD) design, i.e., the geometric design of a part, and the CNC machine specifications. The latter are commonly referred to as "Part programs" or "toolpaths" comprising instructions in a machine language (e.g., G-code) for execution on board the CNC machine. CAM systems are configured to receive CAD elements as input and to provide "Part programs" or tool paths as output, the latter comprising a description of a tool trajectory.

The generation of precise tool trajectories is a relevant element in running a manufacturing machine. Nevertheless, due to mismatches between the calculations of the CAM system and the actual machine parameters, there are a certain number of difficulties in predicting the behaviour of a CNC against the programmed toolpath.

Existing solutions are discussed in the following documents:
US 9 448 553 B2 discusses systems and methods for CNC devices comprising a CAM controller configured to input a CAD file and output a CAM file and a CAM integrated CNC controller configured to input the CAM file and output at least one command for at least one servo controller of a set of one or more servo controllers;
US 11 423 189 B2 discusses a system for autonomous generative design in a system having a digital twin graph a requirements distillation tool for receiving requirements documents of a system in human-readable format and importing useful information contained in the requirements documents into the digital twin graph, and a synthesis and analysis tool in communication with the digital twin graph, wherein the synthesis and analysis tool generates a set of design alternatives based on the captured interactions of the user with the design tool and the imported useful information from the requirements documents;
EP 1 804 146 A1 discusses a method to perform model head assignments for a multi-head composite material application machine having a set of heads, in which a ply geometry for a composite part is received and a configuration for the multi-head composite material application machine is received, and in which a constellation of head locations is generated in response to the ply geometry and the configuration for the multi-head composite material application machine.

In order increase efficiency in producing relatively large parts, multiple head machines can be used. However, existing part programming systems can hardly be suitable to efficiently program an operating machine with multiple heads.

Despite the activity in the area, as witnessed by the existing literature, there is room for further improvement in providing methods and systems that can provide a part program for a high-rate operating machine, saving otherwise time-consuming operations.

### Object and summary

An object of one or more embodiments is to contribute in adequately addressing the issues discussed in the foregoing.

According to one or more embodiments, that object can be achieved via a method having the features set forth in the claims that follow.

One or more embodiments may relate to a corresponding processing system or device.

One or more embodiments may be equipped on board any processing machine, such as a 3D laser cutting operating machine, for instance.

One or more embodiments may include a computer program product loadable in the memory of at least one processing circuit (e.g., a computer) and including software code portions for executing the steps of the method when the product is run on at least one processing circuit. As used herein, reference to such a computer program product is understood as being equivalent to reference to a computer-readable medium containing instructions for controlling the processing system in order to co-ordinate implementation of the method according to one or more embodiments. Reference to "at least one computer" is intended to highlight the possibility for one or more embodiments to be implemented in modular and/or distributed form.

The claims are an integral part of the technical teaching provided herein with reference to the embodiments.

One or more embodiments facilitate increasing a speed at which CAD program modifications may be effected.

One or more embodiments facilitate reducing a distance at which multiple heads can work together, for instance at high dynamic thereby without effecting the production rate.

### Brief description of the several views of the drawings

One or more embodiments will now be described, by way of non-limiting example only, with reference to the annexed Figures, wherein:
Figure 1 is a diagram exemplary of an operating machine apparatus as per the present disclosure;
Figure 2 is a diagram exemplary of a processing device for executing the method as per the present disclosure;
Figure 3 is a diagram exemplary of principles underlying one or more embodiments;
Figure 4 is a diagram exemplary of operations of a method as per the present disclosure, and
Figure 5 is an isometric view of the laser machine apparatus in a work phase of fixture removal/introduction.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The references used herein are provided merely for convenience and hence do not define the extent of protection or the scope of the embodiments.

For the sake of simplicity, in the following detailed description a same reference symbol may be used to designate both a node/line in a circuit and a signal which may occur at that node or line.

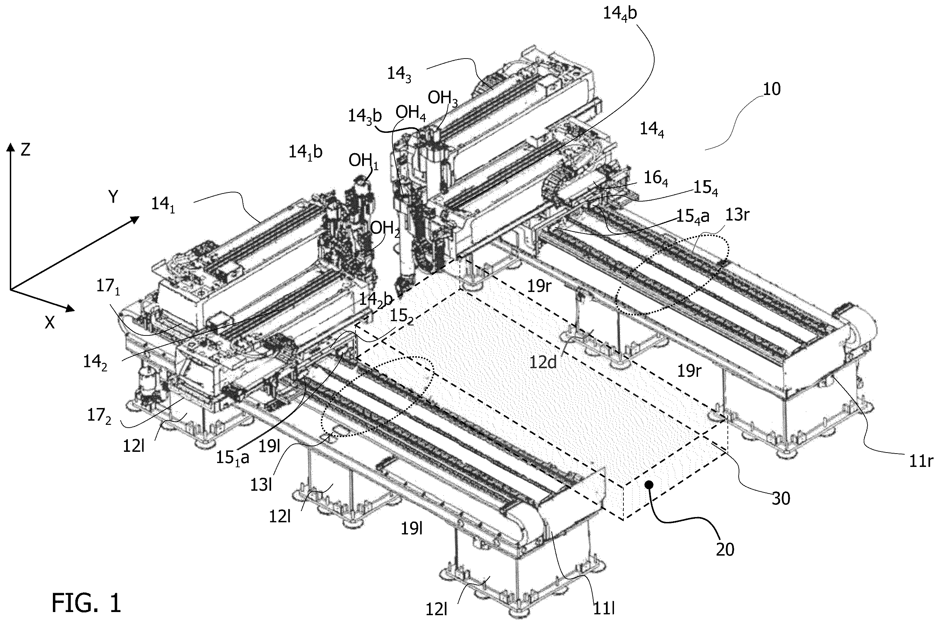

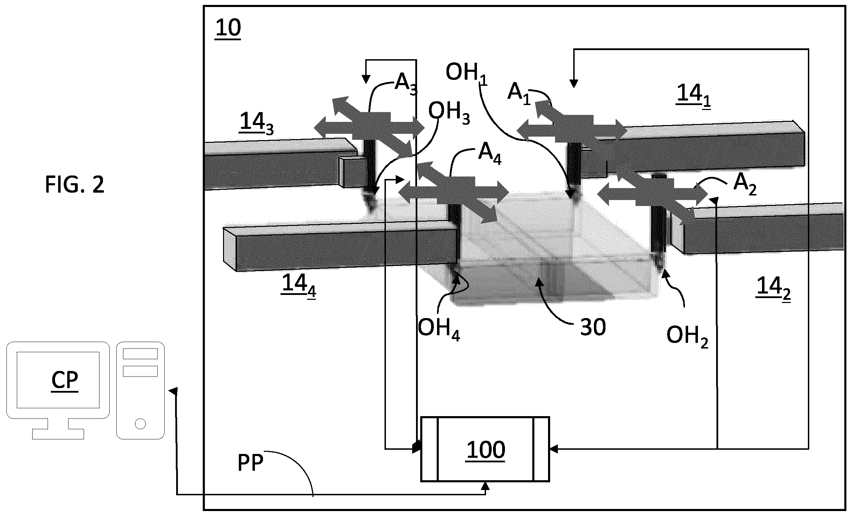

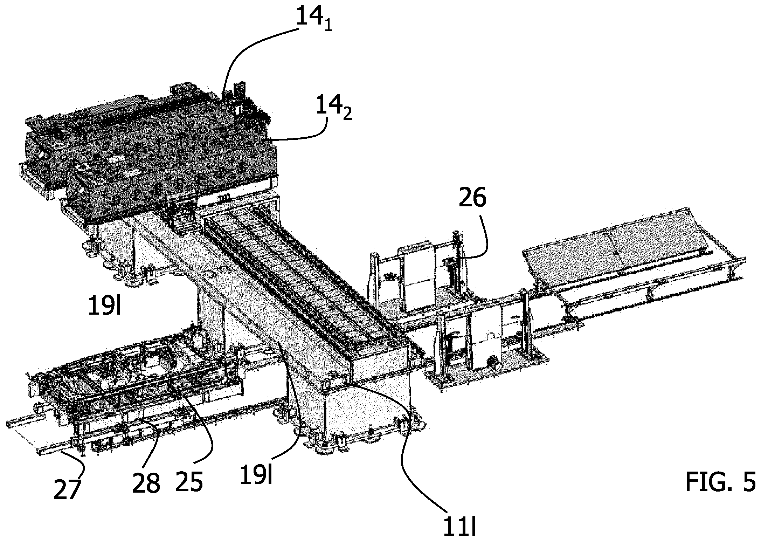

Figure 1 is a diagram exemplary of an isometric view of a laser operating machine apparatus 10, preferably configured to perform three-dimensional (3D) laser cutting of materials. The following description makes also reference to elements, components or details which are shown in the views of figures 2, 3 and 5 of the apparatus (e.g., the first base element, with corresponding cantilevers and operating heads visible in Figure 5).

As exemplified in Figure 1, the laser operating machine apparatus 10 comprises a first base element, (or base, basement) 111 and a second base element 11r having a substantially oblong, specifically parallelepipedal, shape, i.e. a beam, and arranged parallel to one another along their longest side, i.e. along their longitudinal axes (e.g., along the X axis of a Cartesian set of coordinates) .

In the example shown, the base elements 111, 11r are raised with respect to a pavement level, for instance of the environment (e.g., factory) housing the laser operating machine apparatus 10, via a plurality (e.g., three) pillars 121 with reference to the first base element 111. As exemplified in Figure 1, two pillars 121 can be located at opposite ends of each base element 111, 11r, while a third pillar 121 can be located in the central portion along the longitudinal axis X of each base element 111, 11r. t Such an arrangement of pillars 121 defines between each pair of pillars 12l a respective opening 19l. These openings 19l, which facilitate to access an operating area 30 of the apparatus 10, can be used to introduce fixtures (e.g., with parts) within such operating area 30 of the laser machine apparatus 10, replacing them with relative ease without the necessity of removing components at the sides of the working area 30. This determines that, if safety conditions allow, removal of the fixtures could possibly be performed while cantilevers and operating heads, e.g. laser cutting heads, in the other portion of the working area 30, e.g. the portion not corresponding to the opening 19r through which the fixtures is replaced, continue to operate. The term fixtures relates to supports used in laser 3D cutting to position the part to be cut and to hold it in the working area of the machine in a repeatable way. These are currently referred to also as reference fixtures, fixing gauges and jigs. An analogous arrangement, with pillars 12r and openings 19r, can be provided for the second base element 11r. It is underlined that as openings 19l, 19r are present below both base elements 11s, 11r, the openings below one of the base elements, e.g. 11s, can be used for the fixtures, as explained, while the other openings below the other base elements can be used for removing scraps from machining operation, e.g. laser cut scraps.

It is here underlined that the support of the cantilevers is described here as a base element 111, 11r, supported on pillars 121, 12r, in particular to underline the creation of lateral openings 19l, 19r to access the working region 30 under the beams of 111, 11r. Each base element 111, 11r and the corresponding pillars 121, 12r can be considered to correspond to a whole base or basement for the respective cantilevers as well.

As exemplified in Figure 1, the upper surface of each base element 111, 11r carries to guiding tracks (or linear guides) 13r, 13l comprising at least one rail each and extending throughout the X direction of the base elements 111, 11r.

As exemplified in Figure 1, respective operating head carriage elements, i.e. carrying the heads, specifically cantilever beams 14₁, 14₂, 14₃, 14₄ configured to slide along the guiding tracks 13r, 13l are arranged mounted on the base elements engaging said guiding tracks 13l, 13r.

In the example of Figure 1, with reference to the first base element 111, a first pair of cantilever beams 14₁, 14₂, having thus also a parallelepipedal shape, is arranged with their longest sides, i.e., their cantilever longitudinal axis, parallel therebetween and orthogonal to the longest side, i.e. base element longitudinal axis, of the first base element 111, where the first pair of cantilever beams 14₁, 14₂ are coupled to the first guiding track 13l to slide or roll along the first base element 111 via a first movable support 15₁, 15₂ coupled thereto, in particular moving along the rails of the guiding tracks 13l carried by supporting linear shoes, for instance comprising ball bearings, 15₁a and 15₄a are visible in figure 1. In substantially the same way, with reference to the second base element 12r, a first pair of cantilever beams 14₃, 14₄ are arranged with their longest sides parallel therebetween and orthogonal to the longest side of the second base element 11r, where the second pair of cantilever beams 14₃, 14₄ are coupled to the second guiding track 13r to slide along the second base element 11r via a second movable support 15₃, 15₄ coupled thereto.

As it is clear, elements pertaining to each cantilever 14₁, with i index from 1 to 4 in the examples, such as 14, 15 and also 16, 17, or heads OH, described in the following, pertaining to each respective cantilever are indicated with the same index i. Also, for better clarity, reference in the description is made when necessary to all the corresponding elements, e.g. cantilever beams 14₁, 14₂, 14₃, 14₄, even if, due to the type of drawings, they are not all visible, since as said, components with equal index i are basically the same components related to the cantilever or its actuation along directions X and Y (i.e. with the exception of right and left base element 11r, 111 elements, e.g. 12, 13, 14, 19).

Conventionally in the present description the base element longitudinal axis is indicated with X, like the reference axis X to which is in general parallel, while the cantilever longitudinal axis correspondingly is indicated with Y.

As exemplified in Figure 1, each movable support 15₁, 15₂, 15₃, 15₄ corresponds to a moving carriage moving along the tracks 13l, 13r, and carries on its upper portion or surface actuating means 16₁, 16₂, coupled to a respective actuation portion on the facing portion or surface of the cantilever beam 14₁, 14₂, 14₃, 14₄, performing a translation movement orthogonal to the guiding tracks 13l, 13r of the base elements 111, 11r (e.g., parallel to the Cartesian axis X). Therefore, each cantilever beam 14₁, 14₂, 14₃, 14₄ is movable, e.g. by moving on the tracks 13l, 13r on bearings of the movable support 15₁, 15₂, in the X direction, i.e. base element longitudinal axis, along the guiding tracks 13l, 13r via the movable supports 15₁, 15₂, 15₃, 15₄ as well as along the Y direction, i.e. along the cantilever longitudinal axis, via the actuating means 16₁, 16₂, 16₃, 16₄ on the upper surface or portion of the movable supports 15₁, 15₂, 15₃, 15₄ via a respective further actuation portion 17₁, 17₂, 17₃, 17₄ on the cantilever beam 14₁, 14₂, 14₃, 14₄.

Thus, for instance, the first cantilever beam 14₁ is coupled to the respective further actuation portion 17₁ at a first extremity 14₁a (proximal to the respective base element 11r, 111), i.e., the fixed end of the cantilver, over which lays the full range of movement along the Y axis possible via the actuation portion 17₁. Still in the exemplary scenario considered, a second extremity 14₁b of the exemplary cantilever beam 14₁, i.e., the free end of the cantilever, thrusts from the respective base element 111, 11r along the Y direction.

It is underlined that as it is clear from the description the apparatus 10 includes the same components of each base element 111, 11r and each cantilever beam 14₁, 14₂, 14₃, 14₄ comprises substantially the same elements also in the actuation systems (A₁, A₂, A₃, A₄ as indicated below), therefore already before and in the following, for simplicity, reference is also made in describing the structure and the operation of the apparatus 10 only to one base element, e.g. 111, and one cantilever beam, e.g. 14₁, the same description applying analogously however to the other base element and cantilevers.

Thus, for instance, the first cantilever beam 14₁ is coupled to the respective further actuation portion 17₁ at a first extremity 14₁a (proximal to the respective base element 11r, 111), over which lays the full range of movement along the Y axis possible via the actuation portion 17₁. Still in the exemplary scenario considered, a second extremity 14₁b of the exemplary cantilever beam 14₁ thrusts from the respective base element 111, 11r along the Y direction.

As exemplified in Figure 1, a respective (e.g., laser) operating head (known per se) is coupled to the second extremity 14₁b of the exemplary cantilever beam 14₁. For instance, laser operating heads as discussed in document EP 2 177 299 B1 may be suitable for use in one or more embodiments for the operating heads OH₁, OH₂, OH₃, OH₄. Such a type of operating head is purely exemplary and in no way limiting, being otherwise understood that notionally any kind of operating head may be suitable for use in one or more embodiments. For instance, operating heads for laser welding or other kind of manufacturing processing may be suitable for use in one or more embodiments.

As exemplified in Figure 1, the ensemble of second extremities 14₁b, 14₂b, 14₃b, 144b of the cantilever beams 14₁, 14₂, 14₃, 14₄ are directed towards a region 20 (internal the parallel base elements 111, 11r, for instance), that represents a (e.g., 3D) surface XY of a working volume 30.

It is underlined that each cantilever beam 14₁, 14₂, 14₃, 14₄ is actuated by a respective actuation system A₁, A₂, A₃, A₄ which is configured to move the respective cantilever beam 14₁, 14₂, 14₃, 14₄ along a translation axis X, along the base element longitudinal axis, and along a further axis Y orthogonal to axis X, along the cantilever longitudinal axis. The actuation system, e.g. A1 of beam 14₁, in embodiment shown comprises the tracks 13l, the moving support 15₁, the actuating means 16₁, 17₁ moving the cantilever 14₁ along axis Y although it is clear that several variants may be possible, e.g., rack and pinion or ball screw actuations, to obtain the translational movements of the cantilever beam along the X and Y axis. Figure 2 is a diagram illustrating principles underlying one or more embodiments.

As exemplified in Figure 2, an operating machine apparatus 10 comprises a plurality of operating sub-systems 14₁, 14₂, 14₃, 14₄ comprising respective operating tool heads OH₁, OH₂, OH₃, OH₄ and coupled to respective actuating devices A1, A2, A3, A4 configured to displace the operating heads OH₁, OH₂, OH₃, OH₄ in the three-dimensional (3D) space to perform machining operations within a working volume 30. For instance, the actuating devices A1, A2, A3, A4 comprise electromechanical linear actuators (known per se) coupled to sliding supports 16i, 17i for movement along respective guiding tracks 13r, 13l based on control signals received from a CNC control unit 100 which translates the user input (e.g., provided via a processing device and/or computer-readable media CP) into machine (e.g., Cartesian) 3D coordinates X,Y,Z.

The processing device CP can be part of a general computer, such as a personal computer (PC), a UNIX workstation, a server, a mainframe computer, a personal digital assistant (PDA), and/or combinations thereof. The computer readable medium CP can include programming code, such as source code, object code or executable code that can be loaded into the memory of the processing device and processed thereby in order to perform the desired functions of the part program generator, as discussed in the following.

The processing device comprises a CAD interface that can receive a part definition from a CAD system, such as AutoCAD, manufactured by Autodesk, Inc. of San Rafael, California; SolidWorks, manufactured by SolidWorks Corp. of Concord, Massachusetts; or CATIA, manufactured by Dassault Systèmes S.A. of Suresnes, France. The part definition can be received in any suitable data file format, including a vector graphics format, such as the .dwg or .dxf file formats (used by AutoCAD); a boundary representation format, such as the B-REP file format (used by CATIA V4) based on geometric topological boundaries; or a parametric solid/surface feature-based format (used by CATIA V5).

In the exemplary scenario considered, the plurality of operating sub-systems 14₁, 14₂, 14₃, 14₄ comprises laser tool heads OH₁, OH₂, OH₃, OH₄ (per se known), preferably configured to perform 3D laser manufacturing (e.g., cutting).

For the sake of simplicity, one or more embodiments in the following are mainly discussed with reference to an operating machine apparatus 10 for 3D laser cutting like the one exemplified in Figure 1, being otherwise understood that such a type of operating machine apparatus is purely exemplary and in no way limiting.

In one or more embodiments an apparatus as discussed in the Italian Patent Application entitled "A multiple head laser operating machine and corresponding control method" by the same Applicant may be used as the operating machine apparatus 100.

Still for the sake of simplicity, one or more embodiments are discussed in the following mainly with reference to an operating machine apparatus 10 comprising four operating sub-systems 14₁, 14₂, 14₃, 14₄ each equipped with one respective operating head OH₁, OH₂, OH₃, OH₄, being otherwise understood that such a number of operating sub-systems and operating heads is purely exemplary and in no way limiting.

In one or more embodiments, the apparatus 10 exemplified in Figures 1 or 2 comprises any integer number of operating sub-systems 14₁, 14₂, 14₃, 14₄ and/or operating heads OH₁, OH₂, OH₃, OH₄ equal to or greater than two.

In the exemplary scenario considered, the plurality of operating sub-systems 14₁, 14₂, 14₃, 14₄ comprises one or more types of operating head carrier selected out of a cantilever-like carrier, a gate-like carrier and/or a robotic arm carrier.

As exemplified in Figure 2, the operating machine apparatus 10 is configured to perform cutting along a (e.g., circular) shape from at least one target surface of a 3D object located in the manufacturing space 30. As appreciable to those of skill in the art, the target surface may be placed onto a tailored fixture (known per se) configured to provide a backbone for performing laser cutting and shaping thereof.

References A₁, A₂, A₃, A₄ indicate mainly actuation systems along the X axes (e.g., support 15₂ on guiding tracks 13r in Figure 1) or Y axes (e.g., actuation 16₄, 17₁₎, being otherwise understood that this is not limiting to the kind and number of actuation systems that can be present in the apparatus 10. For instance, actuating systems A₁, A₂, A₃, A₄ further comprise actuators configured to displace the laser heads OH₁, OH₂, OH₃, OH₄ along a Z axis orthogonal the X-Y plane, as well as other rotation or translation axes A,B,C, for the operating heads.

According to a relevant aspect, said operating heads, e.g., OH₁, OH₂, OH₃, OH₄, are arranged on the respective cantilever, e.g., 14₁, 14₂, 14₃, 14₄, on the side or corner nearer to or facing the working area, e.g. 30. The plurality of heads, in particular four, OH₁, OH₂, OH₃, OH₄ may be placed all facing the operating region 30 or nearer, along a direction parallel to axis X, to it, in particular substantially in the region of the corner of the cantilever formed by its longest side nearer to or facing the operating region 30 and the shorter side of the cantilever corresponding to the distal extreme 14₁b, 14₂b, 14₃b, 14₄b.

Said operating heads, e.g., OH₁, OH₂, OH₃, OH₄. are mounted on the respective distal extreme, or free end, e.g., 14₁b, 14₂b, 14₃b, 14₄b, of the respective cantilever, e.g., 14₁, 14₂, 14₃, 14₄, mounted in a portion of the distal extreme closer or closest to the operating region 30. In particular said operating heads, e.g., OH₁, OH₂, OH₃, OH₄, are mounted facing the operating region 30 or nearer to it. In particular said operating heads, e.g., OH₁, OH₂, OH₃, OH₄, are mounted substantially in the region of the corner of the cantilever formed by its longest side nearer to or facing the operating region 30 and the shorter side of the cantilever corresponding to its distal extreme 14₁b, 14₂b, 14₃b, 14₄b.

In embodiments, the actuating systems A₁, A₂, A₃, A₄, which comprise at least the actuation along its longitudinal (Y) and transversal (X) axes of the cantilever, e.g. 14₁, may comprise other electromechanical linear actuators (known per se) coupled to the movable supports, e.g. 15₁, for movement along respective guiding tracks 13r, 13l based on control signals received from a CNC control unit 100 which translates the user input (e.g., provided via a processing device and/or computer-readable media CP) into machine (e.g., Cartesian) 3D coordinates X,Y,Z.

For instance, a catenary (per se known) is configured to couple movable support 15₁ to cantilever 14₁ and to carry power and signal which actuate motion along the axis Z and the axes of the operating head OH₁, while another catenary brings the power and the signal to the linear motors.

As exemplified in Figure 1, the space between pillars 121 of the basement 111, 111, identifying openings 19l, 19r at the pavement level, is configured to facilitate replacement of fixtures, usually when the manufacturing process is halted. As exemplified in Figure 5, an isometric view of the laser machine apparatus 10 in a work phase of fixture removal/introduction, showing for simplicity only one of the base elements 111 during a stop of the machine 10 a fixture 25 can be placed therein by passing it through the opening 19l among central and extremal pillars 121. As exemplified in Figure 5, the fixture 25 is moved along extraction tracks 27 on an extraction cart 28 which bring to support and positioning elements, i.e. a lifting system 26, which hold the fixture 25 and bring it in position for operation, in particular by lifting it. As mentioned, it is not excluded that the solution described may possibly allow, if safety conditions allow, removal of the fixtures while cantilevers and operating heads, e.g. laser cutting heads, in the other portion of the working area 30, e.g. the portion not corresponding to the opening 20s through which the fixtures is replaced, continue to operate.

Thus the laser operating machine 10 comprises base elements, e.g. 111, 11r, carrying the cantilevers and corresponding heads, mounted on pillars, e.g., 121, 12r, above the pavement, i.e. the beams are above the pavement supported by the pillars, thus defining openings, e.g., 19l, 19r, between said pillars, e.g., 121, 12r and base elements with a size suitable to allow passage of fixtures, e.g. 25, for the working pieces, in particular placing tracks 27 through said openings 19l, 19r.

For instance, each actuating system A₁, A₂, A₃, A₄ in the plurality of sub-systems 14₁, 14₂, 14₃, 14₄ may be configured to displace the respective machine tool heads OH₁, OH₂, OH₃, OH₄ along five axes or degrees of freedom, for instance along the Cartesian axes X, Y, Z and along two further head axes A, B (e.g., head tilt and rotation with respect to the Z axis).

Therefore, the position in space of each operating head OH₁, OH₂, OH₃, OH₄ may be expressed in terms of the numeric coordinates with respect to the actuated axes.

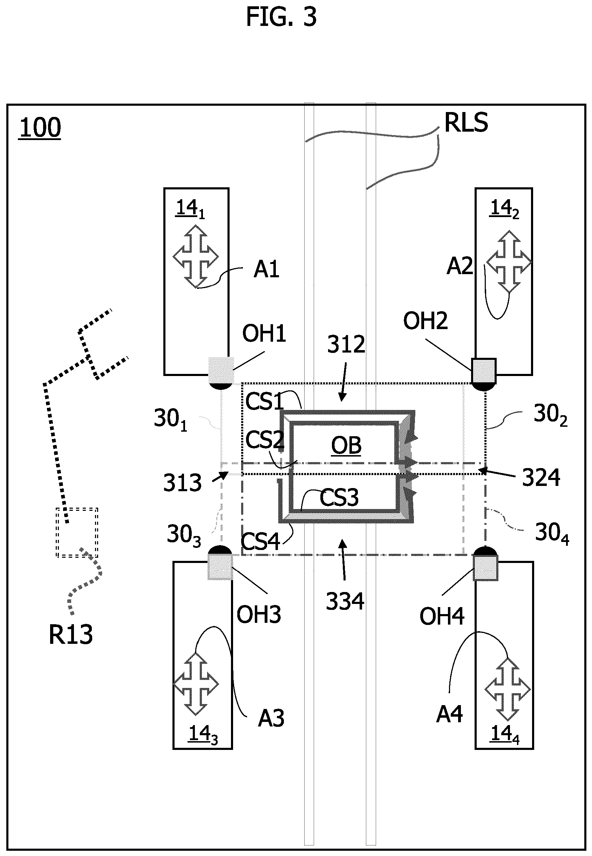

The extremes of the cantilever 14₁, 14₁a which rest on the movable support 15₁, and 14₁b carrying the head OH₁ to which is coupled by a flange 14₁c, are visible. As it can be seen from figure 1 and figure 3 the head OH₁ is mounted on the distal extreme 14₁b of the cantilever 14₁, but not in the center with respect to axis X of the cantilever extreme 14₁b, but mounted in a portion closer or closest to the operating region 30, i.e. facing the operating region 30 or nearer to it, in particular substantially in the region of the corner of the cantilever formed by its longest side nearer to or facing the operating region 30 and the shorter side of the distal extreme 14₁b, i.e., the side of the cantilever along axis X. This determines that the head OH₁ is mounted asymmetrically, i.e. not in the middle of the dimension of the cantilever extreme 14₁b and closer to the operating region 30. This may apply also to heads OH₁, OH₂, OH₃, OH₄ as per Figure 2 and 3 operating in respective (e.g., partially overlapping) portions of an object manufacturing volume, i.e. operating region 30, available within the apparatus 10. In particular, the four heads OH₁, OH₂, OH₃, OH₄ are placed all facing the operating region 30 or nearer to it, in particular substantially in the region of the corner of the cantilever formed by its longest side nearer to or facing the operating region 30 and the shorter side of the cantilever corresponding to the distal extreme 14₁b, 14₂b, 14₃b, 14₄b. Thus each head instead of being in the center or middle of the extremity, i.e. free end, of the cantilever, as measured along the axis X, is positioned closer to the operating region 30. This asymmetry facilitates operating the heads in close proximity without experiencing interference from the carriages.

Figure 3, which represent the apparatus 10 in a top view shows the heads OH₁, OH₂, OH₃, OH₄ operating in respective (e.g., partially overlapping) portions of an object manufacturing volume placed all facing the operating region 30, substantially in the region of the corner of the cantilever formed by its longest side nearer to or facing the operating region 30 and the shorter side of the cantilever corresponding to the distal extreme. In other words, there the heads OH₁, OH₂, OH₃, OH₄ are arranged in a portion closer or closest to the operating region 30 along a direction parallel to axis X, i.e. nearer to or facing the operating region 30, in particular on the corresponding edge or corner.

As exemplified in Figure 3 the actuating devices A₁, A₂, A₃, A₄ are configured to displace the respective operating tool heads OH₁, OH₂, OH₃, OH₄ in respective (e.g., partially overlapping) portions of an object manufacturing volume OB available within the apparatus 10.

For instance:
a first set of actuating devices A₁ is configured to displace a first operating head OH₁ along a plurality of axes X, Y, Z so that it can manufacture a 3D object O (e.g., a car shield) within a first portion 30₁ of the manufacturing volume 30;
a second set of actuating devices A₂ is configured to displace a second operating head 142 along a plurality of axes X, Y, Z so that it can manufacture a 3D object OB within a second portion 30₂ of the manufacturing volume 30;
a third set of actuating devices A₃ is configured to displace a third operating head 143 along a plurality of axes X, Y, Z so that it can manufacture a 3D object OB within a second portion 30₃ of the manufacturing volume 30; and
a fourth set of actuating devices A₄ is configured to displace a fourth operating head 144 along a plurality of axes X, Y, Z so that it can manufacture a 3D object within a fourth portion 30₄ of the manufacturing volume 30.

As exemplified in Figures 2 and 3, it is possible to have partial overlaps among the portions 30₁, 30₂, 30₃, 30₄ of the manufacturing volume 30 that are assigned to each operating head OH₁, OH₂, OH₃, OH₄. Such an overlap facilitates increasing flexibility and efficiency in operating the plurality of heads OH₁, OH₂, OH₃, OH₄, which can work together at the same time on a same workpiece. Therefore, constraints in the definition of the work parts to assign to each head can be reduced.

As exemplified in Figure 3, one or more robot arms R13 can be present within the system 100, preferably at one of the open sides adjacent the two base elements of the apparatus 10. For instance, the robot arm R13 can be used to place new material sheets over fixtures and/or to move parts at the end of their manufacturing cycle (e.g., move a finished door-ring part after it's been cut). In one or more embodiments, it is possible to perform such a displacement of the worked parts as soon as the operating heads slide along the X axis to move towards the other fixture present in the working space. Therefore, the robot arm R13 can perform during a "masked time", thereby facilitating increasing the productivity of the machine 10. As exemplified in Figure 3, at the end of a processing cycle, the rails RLS going through the window among pillars supporting each base element can be used to replace fixtures, as discussed in the foregoing with reference to Figure 5.

For instance, as exemplified in Figure 3:
each portion 30₁, 30₂, 30₃, 30₄ has a respective portion volume, for instance defined by a parallelepiped having length along X about 4350 mm, width along Y 1530 mm and height along Z 650 mm;
the total manufacturing volume 30 is a function of the volumes of the respective portions 30₁, 30₂, 30₃, 30₄ and their overlaps, for instance total volume 30 is equal to a parallelepiped having length along X about 4750 mm, width along Y about 2860 mm and height along Z about 650 mm.

As exemplified in Figure 3:
the first volume portion 30₁ and the second volume portion 30₂ have a first partial overlap 312 equal or greater than 83% therebetween; for instance, the first overlap volume 312 can be defined as a parallelepiped having length along X about 4350 mm, width along Y about 1530 mm and height along Z about 650 mm for a total of 4.326 m³;
the third volume portion 30₃ and the fourth volume portion 30₄ have a second partial overlap 334 equal or greater than 83%; for instance, the second overlap volume 334 has the same size as the first overlap volume 312;
the first volume portion 30₁ and the third volume portion 30₃ have a third partial overlap 313 equal or lower than 7%; for instance, the third overlap volume 313 can be defined as a parallelepiped having length along X about 4350 mm, a width along Y about 200 mm and a height along Z about 650 mm for a volume about 0.565 m³; and
the second volume portion 30₂ and the fourth volume portion 30₄ have a fourth partial overlap 324 equal or lower than 7%; for instance, the fourth overlap volume 324 has the same size as the third overlap volume 313.

As exemplified in Figure 2, the apparatus 10 is a Computerized Numerical Control (CNC) operating machine in which the actuating devices of the subsystems A₁, A₂, A₃, A₄ are coupled to a CNC controller device 20 configured to provide drive signals thereto in order to displace the respective operating heads OH₁, OH₂, OH₃, OH₄ within the manufacturing volume 30 according to toolpath trajectories calculated using a method as per the present disclosure.

In a manner per se known, the CNC controller device 100 is further configured to receive signals from sensors and other parts equipped on-board of the apparatus 10 (not visible in Figure 1) in order to apply feedback control mechanisms to the actuating devices A₁, A₂, A₃, A₄ and to drive laser processing via the operating heads OH₁, OH₂, OH₃, OH₄ in the plurality of sub-systems A₁, A₂, A₃, A₄.

As exemplified in Figure 2, the CNC controller 100 is configured to be coupled to a processing device CP for performing computer-aided design (CAD) and/or computer-aided manufacturing of the parts to be produced via the operating machine 10.

A CAD file generated by a CAD system is the general input of a CAM system. In some cases, the CAD data may be entered directly into the CAM system. Such systems may also provide basic CAD functions.

In a manner per se known, the main purpose of a CAM system is to transform the CAD file, which contains geometrical information about a part, into a part program file PP, which contains sequential commands for a particular CNC machine 10. The part program file PP may also be called machine command or toolpath file.

As exemplified herein, the CNC controller 100 is configured to process the part program file PP and translated the instructions therein into drive signals that set the speeds, feeds, accelerations, and various other parameters of actuators A₁, A₂, A₃, A₄ in the plurality of apparatus sub-systems A₁, A₂, A₃, A₄.

As exemplified herein, the CNC controller 100 comprises a Human-Machine Interface, HMI or user interface, UI configured to receive the user data (e.g., via a touchscreen) and/or machine data (e.g., provided by machine sensors) and to enable exchange of data between the user and the machine in terms of input/output data.

Figure 1 provides an exemplary view of the arrangement of the plurality of sub-systems A₁, A₂, A₃, A₄ in the apparatus 10 in which it is visible how the cantilever carriers 14₁, 14₂, 14₃, 14₄ are coupled to the respective operating heads OH₁, OH₂, OH₃, OH₄. Figure 2 further exemplifies how each carrier in the plurality of carriers 14₁, 14₂, 14₃, 14₄ comprises a set of actuating devices A₁, A₂, A₃, A₄ configured to displace each of the respective heads OH₁, OH₂, OH₃, OH₄ at least along a plurality of Cartesian axes X, Y, Z of the 3D work space.

Figure 3 is a further diagram exemplary of principles underlying one or more embodiments.

As exemplified in Figure 3, in manufacturing an object OB with a multi-head operating machine apparatus 10, the part program PP is configured to consider:
how to separate the total cutting shape of the object OB in various sections CS1, CS2, CS3, CS4 so as to obtain individual toolpaths to various actuators A₁, A₂, A₃, A₄ in the apparatus 10; and
how to manage possible conflict areas at the boundaries of the individual portion volumes 30₁, 30₂, 30₃, 30₄ and/or overlapping portion volumes 312, 424, 313, 334.

As appreciable to those of skill in the art, a toolpath is not merely a geometry, but also a tool path, i.e., a tool that moves along a path. All machines have areas or directions where the toolpath may be difficult to navigate. A part program PP contains toolpaths, specified in coordinates of lines and circles, or splines using calculation results of the cross section between two surfaces: the tool radius and the mathematically defined surface from the CAD system.

As exemplified in Figure 3, the overlapping edges of the object OB spanning across adjacent volumes 312, 324 become a problem in machine space due to the positioning of the operating heads OH₁, OH₂, OH₃, OH₄ and corresponding CNC machine limits (e.g., speed, acceleration) to achieve position changes.

As appreciable to those of skill in the art, the term "digital twin" currently refers to a detailed and dynamically updated virtual replica of physical objects or processes, made to monitor performance, test different scenarios, predict issues, and find optimization opportunities. With respect to conventional computer-aided design and engineering (CAD/CAE) models, a digital twin has a real-world counterpart from which real-time data is received via sensors equipped on-board the apparatus. The hardware part also includes actuators, converting digital signals into mechanical movements, network devices like routers, edge servers, and internet-of-things (IoT) gateways, among others. Data from sensors is stored into a middleware platform that also takes care of such tasks as connectivity, data integration, data processing, data quality control, data visualization, data modeling and governance, and more. An analytics engine (e.g., powered by machine learning models) performs real-time monitoring and runs simulation software.

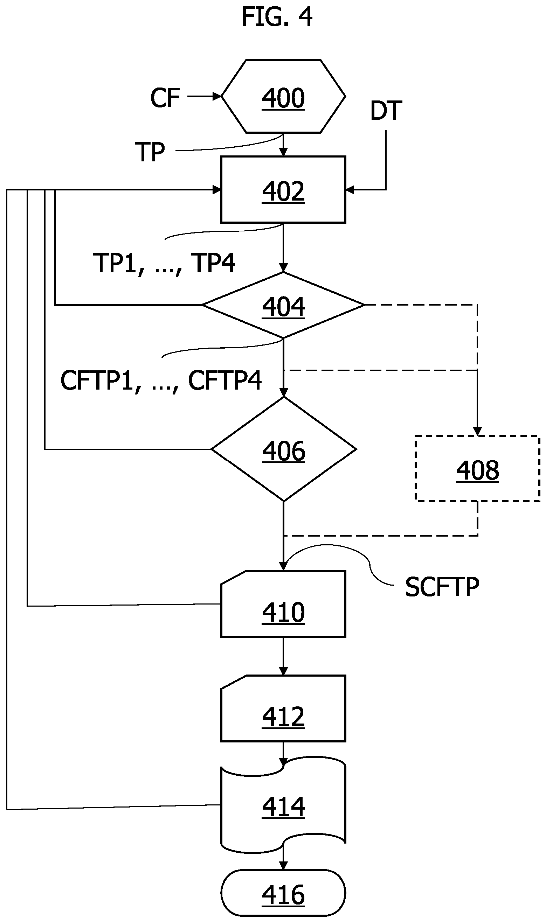

As exemplified in Figure 4, a method of operating a multi-head operating machine (while reducing possible collision risks) comprises:
block 400: applying (offline) CAM processing based on a model of the apparatus 10 and a CAD file of the object to be manufactured, obtaining as a result a toolpath TP for producing the object, e.g. for the profile of the shape to be laser cut from a (e.g., top) surface of the object OB;
block 402: via a digital twin model DT (per se known) of the machine 10 configured to mirror the dynamical performance of the physical apparatus 10, emulating or simulating the execution of the displacement of the toolheads OH₁, OH₂, OH₃, OH₄ of the plurality of sub-systems A₁, A₂, A₃, A₄, thereby distributing or dividing the whole toolpath TP into a plurality of toolpaths TP1,...,TP4 for calculation via CAM (e.g., via an auto-balancing algorithm), therefore assigning respective toolpaths to each of the operating machine heads OH₁, OH₂, OH₃, OH₄ of the apparatus 10. For instance, the auto-balancing algorithm comprises applying artificial neural network, ANN processing to a set of simulated toolpath partitions to select a way to distribute toolpath that has a reduced time and/or a reduced risk of collisions. In order to do so, the ANN processing stage can be trained using fed training data related to a set of tested or computed toolpaths or collision-free toolpaths SCFTP (obtained as discussed in the following) to apply pattern recognition processing (per se known) to a set of toolpath partitions.
block 404: checking the presence of potential risk for collision in adjacent work regions CS12, CS23, CS34, CS41 in the plurality of toolpaths TP1,...,TP4, for instance by detecting whether, at any point in time during the simulated manufacturing process, the pair-wise distance between heads falls below a threshold value (e.g., 20 millimeters with an overrun sensitivity of about 0.003 mm); in case of a positive result of the check, indicating the presence of conflicts, going back to block 402; in case of a negative result of the check, providing the plurality of collision-free toolpaths CFTP1, ..., CFTP4 as a result;
block 406: emulating (or simulating) each of the collision-free toolpaths received CFTP1, ..., CFTP4 (e.g., using an hand-box software suite, per se known) for each of the machine operating heads OH₁, OH₂, OH₃, OH₄ so as to provide enhancement of performance elements of interest for the user (e.g., optimization of speed, reduction of excursion of values in the cinematic parameters of the actuators such as jerk, minimization of the total production time, and so on); any modification effected to a single toolpath (e.g., TP1 for the first head OH₁ is modified to take into account the fact that this head has an older actuator for displacement along horizontal axis X) triggers the repetition of the operations in blocks 402, 404 in order to verify that the single-toolpath modifications do not introduce collisions among operating heads in the plurality of operating heads OH₁, OH₂, OH₃, OH₄; as a result of the second iteration of block 402, 404, 406, a set of collision free toolpaths SCFTP is provided.

Preferably, in block 408 the set of collision-free toolpaths SCFTP are tagged 408 as collision-free and stored in memory so that they can be identified and retrieved. For instance, in case new modifications effected in block 406 fail to compute a new stable collision-free trajectory, it is possible to go back to the previously calculated ones CFTP1,...,CFTP4 and to provide those as the set of collision free toolpaths SCFTP.

In one or more embodiments, collision free toolpaths with respect to those in which collision occur introduce delays among potentially conflicting heads so that one is halted while the other operates. For instance, if two or more heads (e.g., OH₁ with OH₂) are going to collide, one or more head (e.g., OH₁ or OH₂) will be paused until the other is out of reach thanks to a synchronization system. Such a delay time (e.g., about 1 second) is introduced in a way to balance workloads and minimize at the same time the total manufacturing cycle time for a certain object OB. For instance, if the among the "colliding" heads there is one that has a reduced workload with respect to the other, it is the latter that is delayed so as to balance the workloads and reducing the overall time. Such a way of assigning delays facilitates synchronizing the total time in which each operating head is actively operating. For instance, the operation of checking the possible collisions among the toolpaths TP1,...,TP4 comprises calculating a total cycle time based on operation length and programmed speed of the machine.

As exemplified in Figure 4, the method further comprises:
block 410: for each operating head in the plurality of operating heads OH₁, OH₂, OH₃, OH₄ (e.g., starting from the first operating head OH₁) performing a dry run (e.g.., via the HMI of the CNC controller) of the respective collision-free toolpath (e.g., TP1) of the set of collision-free toolpaths at a speed of movement of the respective head (e.g., OH₁) below a certain threshold value (e.g., 10% of the maximum speed) in order to detect whether in the manufacturing environment there is still the possibility of collision among operating heads; in case there is still a collision detected, one head will be paused until the other is out of reach (synchronization system); in case of wrong programming or procedure, the method comprises running a real time collision check on the machine 10 during the dry run, stopping actuators just before a possible collision;
block 412: for each operating head in the plurality of operating heads OH₁, OH₂, OH₃, OH₄ (e.g., starting from the first operating head OH₁) performing a dry run (e.g.., via the HMI of the CNC controller) of the respective collision-free toolpath (e.g., TP1) of the set of collision-free toolpaths while removing speed limits set in block 410; in case of wrong programming or procedure, the method comprises running a real time collision check on the machine 10 during the dry run, stopping actuators just before a possible collision;
block 414: applying laser cutting processing according to the toolpaths that have passed blocks 410, 412; if there is still the request to apply changes after performing the first cut, it is possible to halt the manufacturing process and go back to the toolpath planning stage 402; the machine 10 may be programmed to introduce a further delay via the synchronization system, pausing one head with respect to another in case a possible collision is detected; in case of wrong programming or procedure, the method comprises running a real time collision check on the machine 10 during the dry run, stopping actuators just before a possible collision;
block 416: manufacturing the object OB via the apparatus 10 (e.g., laser cutting a vehicle component such as a door shield).

In one or more embodiments, in cases there is a request for modifications during the production 416, it is possible to run the entire procedure once again while the program halts any attempt to execute the toolpaths without running a simulation on the digital twin.

The verification process of the machine program file PP on a digital twin DT of the apparatus 10 prior to actual execution on the machine facilitates countering later on-machine verification depending on the CNC machine used and the complexity of the part to be verified. On-machine verification may result in large non-cutting times, or dead times, and is therefore non-desirable in some circumstances.

Therefore, one or more embodiments assist a user in countering head or machine conflicts, such as collisions.

As exemplified in a first example, a method comprises assigning a set of toolpaths to a plurality of operating heads of an operating machine apparatus (such as a three-dimensional, 3D laser cutting operating machine apparatus, for instance), the operating heads being displaceable within respective operating regions via a plurality of sub-systems of the operating machine apparatus. For instance, the method comprises:
generating a global toolpath based on a computerized object model provided via a computer-aided design, CAD processing stage;
based on respective operating regions and on a target travel time, partitioning the global toolpath and assigning toolpath partitions of a set of toolpath partitions to respective operating heads of the plurality of operating heads;
providing a computerized machine model configured to emulate the dynamical behavior of the operating machine apparatus;
emulating, via the computerized machine model, the displacement of the operating heads in the plurality of operating heads according to the toolpath partitions in the set of toolpath partitions;
based on the emulated displacement, detecting collisions among machine operating heads in the plurality of machine operating heads;
in response to detecting the presence of mutual collisions, adjusting and (re-)assigning toolpath partitions of the set of toolpath partitions to respective operating heads in the plurality of machine operating heads;
in response to failing to detect the presence of mutual collisions, providing the set of toolpath partitions as a set of collision-free toolpaths;
providing the set of collision-free toolpaths to the operating machine apparatus for driving the sub-systems in the set of sub-systems to displace each of the operating heads in the plurality of operating heads according to the respective collision-free toolpath of the set of collision-free toolpaths.

As exemplified herein, partitioning and assigning toolpath partitions of a set of toolpath partitions comprises reducing, preferably minimizing, the target travel time in which each sub-system in the set of sub-systems displaces each operating head in the plurality of operating heads through each of the respective toolpath partitions of the set of toolpath partitions. For instance, the target travel time for each toolpath partition of the set of toolpath partitions is about the same.

As exemplified herein, detecting mutual collisions among operating heads in the plurality of operating heads comprises: during the emulated displacement, computing a pair-wise distance among positions of operating heads of the plurality of operating heads, and performing a comparison of the computed pair-wise distance with a threshold value, indicating the presence of a collision in response to the comparison failing to exceed a threshold value.

For instance, adjusting and re-assigning toolpath partitions of the set of toolpath partitions to respective operating heads in the plurality of operating heads comprises introducing a delay in the displacement of at least one head with respect to the other operating heads involved in the detected collision.

As exemplified herein, the method comprises tagging the set of collision-free toolpaths and storing the tagged set of collision-free toolpaths into a computer-readable medium.

As exemplified herein, respective operating regions of the operating heads of the plurality of operating heads are partially overlapping.

For instance, the method further comprises:
driving the sub-systems in the set of sub-systems to displace each of the operating heads in the plurality of operating heads according to the respective collision-free toolpath of the set of collision-free toolpaths at a fraction of a maximum displacement speed (for instance, 1/10 of the max speed), and
during driving the sub-systems, performing a real time collision detection and stopping the sub-systems in response to detecting collisions among operating heads in the plurality of operating heads.

As exemplified herein, the method comprises:
driving the sub-systems in the set of sub-systems to displace each of the operating heads in the plurality of operating heads according to the respective collision-free toolpath of the set of collision-free toolpaths, and
during driving the sub-systems, performing a real time collision detection and introducing a delay in the toolpath of at least one operating head in response to detecting collisions among the at least one operating head and at least another operating head.

As exemplified herein, a processing system comprises at least one CNC controller coupled to an operating machine apparatus, the processing system configured to perform the method as per the present disclosure.

As exemplified herein, a laser operating machine comprises:
a plurality of laser operating heads configured to perform laser processing, mounted on respective cantilevers, the cantilevers being mounted on at least a base element with an elongated shape, movable along a base element longitudinal axis of said at least base element, each cantilever extending substantially orthogonal with respect to said base element longitudinal axis, each cantilever being actuated by a respective actuation system comprising at least a translation along said base element longitudinal axis and a cantilever longitudinal axis (Y) orthogonal to such base element longitudinal axis.

As exemplified herein, the laser operating machine comprises two base elements arranged parallel one to the other along their longer dimension at a distance one from the other, identifying an operating area in the space between the base elements, each base element carrying at least two cantilevers extending inwardly in the space between such base elements, substantially orthogonal with respect to said base element longitudinal axis, each cantilever being actuated by a respective actuation system comprising at least translation along said base element longitudinal axis and cantilever longitudinal axis orthogonal to such base element longitudinal axis.

For instance, the at least base element carries at least two cantilevers extending substantially orthogonal with respect to said base element longitudinal axis.

As exemplified herein, a system comprises:
at least one operating machine apparatus (e.g., for 3D laser cutting) that provides a set of manufactured objects within the work region as a result of displacing the plurality of operating heads according to respective collision-free toolpaths provided via the method of the present disclosure, and
at least one robotic station configured to move the manufactured objects in the set of manufactured objects from the work region towards user stations during displacement of the plurality of operating heads.

It will be otherwise understood that the various individual implementing options exemplified throughout the figures accompanying this description are not necessarily intended to be adopted in the same combinations exemplified in the figures. One or more embodiments may thus adopt these (otherwise non-mandatory) options individually and/or in different combinations with respect to the combination exemplified in the accompanying figures.

Without prejudice to the underlying principles, the details and embodiments may vary, even significantly, with respect to what has been described by way of example only, without departing from the extent of protection. The extent of protection is defined by the annexed claims.

## Claims

1. A method, comprising:
assigning a set of toolpaths (SCTFP, PP) to a plurality of operating heads (OH₁, OH₂, OH₃, OH₄) of an operating machine apparatus (10), the operating heads (OH₁, OH₂, OH₃, OH₄) being displaceable within respective operating regions (30₁, 30₂, 30₃, 30₄) via a plurality of sub-systems (14₁, 14₂, 14₃, 14₄; A₁, A₂, A₃, A₄) of the operating machine apparatus (10),
wherein the method comprises:
generating (400) a global toolpath (TP) based on a computerized object model (OB) provided via a computer-aided design, CAD processing stage (CP);
based on respective operating regions (30₁, 30₂, 30₃, 30₄) and on a target travel time, partitioning (402) the global toolpath (TP) and assigning toolpath partitions of a set of toolpath partitions (TP1, ..., TP4) to respective operating heads of the plurality of operating heads (OH₁, OH₂, OH₃, OH₄);
providing a computerized machine model (DT) configured to emulate the dynamical behavior of the operating machine apparatus (10);
emulating (402), via the computerized machine model (DT), the displacement of the operating heads in the plurality of operating heads (OH₁, OH₂, OH₃, OH₄) according to the toolpath partitions in the set of toolpath partitions (TP1, ..., TP4);
based on the emulated displacement, detecting (404) collisions among operating heads in the plurality of operating heads (OH₁, OH₂, OH₃, OH₄);
in response to detecting mutual collisions, adjusting and re-assigning (402, 404, 406) toolpath partitions of the set of toolpath partitions (TP1, ..., TP4) to respective operating heads in the plurality of operating heads (OH₁, OH₂, OH₃, OH₄);
in response to failing to detect the presence of mutual collisions, providing (406) the set of toolpath partitions (TP1, ..., TP4) as a set of collision-free toolpaths (CFTP1, ..., CFTP4; SCFTP);
providing (410) the set of collision-free toolpaths (CFTP1,.., CFTP4; SCFTP) to the operating machine apparatus (10) for driving (100) the sub-systems in the set of sub-systems (14₁, 14₂, 14₃, 14₄; A₁, A₂, A₃, A₄) to displace each of the operating heads in the plurality of operating heads (OH₁, OH₂, OH₃, OH₄) according to the respective collision-free toolpath of the set of collision-free toolpaths (CFTP1,.., CFTP4; SCFTP).

2. The method of claim 1, wherein partitioning (402) and assigning toolpath partitions of a set of toolpath partitions (TP1, ..., TP4) comprises reducing, preferably minimizing, the target travel time in which each sub-system in the set of sub-systems (14₁, 14₂, 14₃, 14₄; A₁, A₂, A₃, A₄) displaces each operating head in the plurality of operating heads (OH₁, OH₂, OH₃, OH₄) through each of the respective toolpath partitions of the set of toolpath partitions (TP1,..,TP4), preferably wherein the target travel time for each toolpath partition of the set of toolpath partitions (TP1,...,TP4) is about the same.

3. The method of claim 1 or claim 2, wherein detecting (404) mutual collisions among operating heads in the plurality of operating heads (OH₁, OH₂, OH₃, OH₄) comprises:
during the emulated displacement (402), computing a pair-wise distance among positions of operating heads of the plurality of operating heads (OH₁, OH₂, OH₃, OH₄), and
performing a comparison (404) of the computed pair-wise distance with a threshold value, indicating the presence of a collision in response to the comparison failing to exceed a threshold value.

4. The method of any one of the previous claims, wherein adjusting and re-assigning (402, 404, 406) toolpath partitions of the set of toolpath partitions (TP1, ..., TP4) to respective operating heads in the plurality of operating heads (OH₁, OH₂, OH₃, OH₄) comprises introducing a delay in the displacement of at least one head with respect to the other operating heads involved in the detected collision.

5. The method of any one of the previous claims, comprising tagging (408) the set of collision-free toolpaths (CFTP1, ..., CFTP4; SCFTP) and storing the tagged set of collision-free toolpaths into a computer-readable medium.

6. The method of any one of the previous claims, wherein respective operating regions (30₁, 30₂, 30₃, 30₄) of the operating heads of the plurality of operating heads (OH₁, OH₂, OH₃, OH₄) are partially overlapping (312, 313, 324, 334).

7. The method of any one of the previous claims, comprising:
driving (410) the sub-systems in the set of sub-systems (14₁, 14₂, 14₃, 14₄; A₁, A₂, A₃, A₄) to displace each of the operating heads in the plurality of operating heads (OH₁, OH₂, OH₃, OH₄) according to the respective collision-free toolpath of the set of collision-free toolpaths (CFTP1,..., CFTP4; SCFTP) at a fraction of a maximum displacement speed, preferably a 1/10 fraction, and
during driving (410) the sub-systems, performing a real time collision detection and stopping the sub-systems in response to detecting collisions among operating heads in the plurality of operating heads (OH₁, OH₂, OH₃, OH₄).

8. The method of any one of the previous claims, comprising:
driving (410) the sub-systems in the set of sub-systems (14₁, 14₂, 14₃, 14₄; A₁, A₂, A₃, A₄) to displace each of the operating heads in the plurality of operating heads (OH₁, OH₂, OH₃, OH₄) according to the respective collision-free toolpath of the set of collision-free toolpaths (CFTP1,.., CFTP4; SCFTP), and
during driving (410) the sub-systems, performing a real time collision detection and introducing a delay in the toolpath of at least one operating head in response to detecting collisions among the at least one operating head and at least another operating head (OH₁, OH₂, OH₃, OH₄).

9. A processing device, comprising at least one CNC controller (100, CP) configured to be coupled to an operating machine apparatus (10) comprising a plurality of sub-systems (14₁, 14₂, 14₃, 14₄; A₁, A₂, A₃, A₄) coupled to plurality of operating heads (OH₁, OH₂, OH₃, OH₄) having respective operating regions (30₁, 30₂, 30₃, 30₄) within a work region (30), the processing device configured to perform the method according to any one of the previous claims.

10. Operating machine apparatus (10), comprising:
a plurality of sub-systems (14₁, 14₂, 14₃, 14₄; A₁, A₂, A₃, A₄) coupled to plurality of operating heads (OH₁, OH₂, OH₃, OH₄) having respective operating regions (30₁, 30₂, 30₃, 30₄) within a work region (30),
at least one CNC controller (100) configured to drive the sub-systems in the plurality of sub-systems (14₁, 14₂, 14₃, 14₄; A₁, A₂, A₃, A₄) to displace operating heads in the plurality of operating heads (OH₁, OH₂, OH₃, OH₄) according to respective collision-free toolpaths of a set of collision-free toolpaths (CFTP1,.., CFTP4; SCFTP) provided via the method of any of the preceding claims, preferably a 3D laser cutting operating machine apparatus.

11. A system, comprising:
at least one operating machine apparatus (10) according to claim 10, wherein the operating machine apparatus (10) provides a set of manufactured objects (OB) within the work region (30) as a result of displacing the plurality of operating heads (OH₁, OH₂, OH₃, OH₄) according to respective collision-free toolpaths, and
at least one robotic station (R13) configured to move the manufactured objects in the set of manufactured objects (OB) from the work region (30) towards user stations during displacement of the plurality of operating heads (OH₁, OH₂, OH₃, OH₄).
